# EUROPEAN PATENT SPECIFICATION

(11) **EP 2 032 889 B1**
(45) Date of publication and mention of the grant of the patent: **09.09.2009**
(21) Application number: 07765623.9
(22) Date of filing: 26.06.2007
(51) Int. Cl.: F16M 13/00

(54) **SYSTEM FOR POSITIONING AND PRELOADING A SUPPORT BEAM BY BENDING DEFORMATION**
SYSTEM ZUR POSITIONIERUNG UND VORBELASTUNG EINES STÜTZBALKENS MITTELS BIEGEDEFORMATION
SYSTEME POUR POSITIONNER ET PRE-CHARGER UNE POUTRE DE SUPPORT SELON SA RESISTANCE A LA FLEXION

(30) Priority: 29.06.2006 IT PD20060264
(43) Date of publication of application: 11.03.2009
(73) Proprietor: LINO MANFROTTO + CO. S.p.A., 36061 Bassano del Grappa (IT)
(72) Inventor: SPEGGIORIN, Paolo, I-36065 Mussolente (IT); GUIDOLIN, Stefano, I-36027 Rosa (IT)
(74) Representative: Susanetto, Carlo
(86) International application number: PCT/EP2007/056349
(87) International publication number: WO 2008/000733

(56) References cited:
- DE-A1- 19 735 331
- DE-C- 122 846
- FR-A1- 2 281 538

## Description

### Technical field

The present invention relates to a system for positioning and preloading a support beam by bending deformation having the characteristic features set out in the main claim.

### Technological background

The main, but not exclusive, application of the present invention is in the photo-cinematographic sector, where there is a known need for support structures for stage apparatus or devices, such as lighting installations. This apparatus may also be relatively heavy with the result that these support structures have to be appropriately dimensioned from the point of view of loading capacity. At the same time, however, they must be able to be assembled and dismantled extremely rapidly, be of limited bulk and weight, and be readily adaptable to different environments.

In the general prior art, telescopic support beams are known which are extended horizontally between two opposing walls, by pressure. In this case, their loading capacity depends substantially on the frictional force between the opposing ends of the beam and the plane of abutment of the walls and therefore, indirectly, on the force by which the beam is compressed axially against the walls.

With this type of support beam, the loads applied must be such that they do not cause any substantial bending deformation of the beam, as that would reduce the pressure that the beam exerts on the abutment walls and would also reduce the frictional force supporting it.

For that reason, the support beams described above are not adapted to bear loads of any significant size.

In the particular technical sector considered here, a system for positioning and preloading a support beam is disclosed in German Patent Specification DE19735331, in which the beam is extended horizontally between a pair of compression members bearing on the opposing walls and in which the opposing ends of the beam are engaged. The beam is therefore axially compressed and guided to bend upwards in deformation. In this way, the beam is preloaded and any load suspended thereon and pulling downwards tends to bring the beam back into its extended position, thereby increasing the pressure that it exerts on the abutment walls and therefore also the bearing capacity of the system.

In the system described above, the beam is axially compressed by a double-lever articulated mechanism interposed between a bearing base of the compression member and a seat housing one end of the beam. The double-lever articulation is controlled by a pair of screws disposed symmetrically at the sides of the seat housing the end of the beam.

This technical solution also has some drawbacks, including the relative instability of the beam compression system, as a result of which the beam has initially to be guided during its upward bending deformation. For the same reason, the two screws have to be actuated substantially at the same time.

A further drawback of the solution described above lies in the fact that the degree of compression of the beam is obtained in a substantially empirical or random manner, with no possibility of effective control, which may cause the beam to be excessively preloaded which may damage the support system, the beam itself, or the abutment walls.

### Description of the invention

The problem underlying the present invention is that of providing a system for positioning and preloading a support beam by bending deformation, which is structurally and functionally designed to remedy the drawbacks discussed above with respect to the prior art.

This problem is solved by the present invention by means of a system for positioning and preloading a support beam by bending deformation embodied in accordance with the accompanying claims.

### Brief description of the drawings

The characteristic features and advantages of the invention are set out in the following detailed description of a preferred embodiment thereof, shown by way of non-limiting example in the accompanying drawings, in which:
Fig. 1 is a perspective front view of a system for positioning and preloading a support beam by bending deformation according to the present invention;

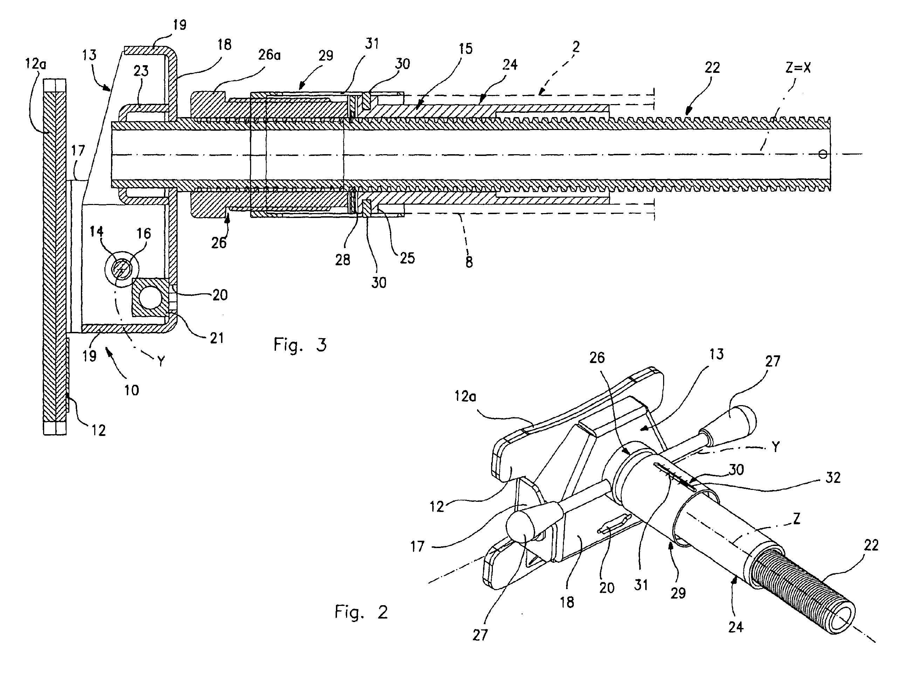

Fig. 2 is a perspective top view, on an enlarged scale, of a first component of the system of Fig. 1;
Fig. 3 is a view in longitudinal section of the component of Fig. 2;

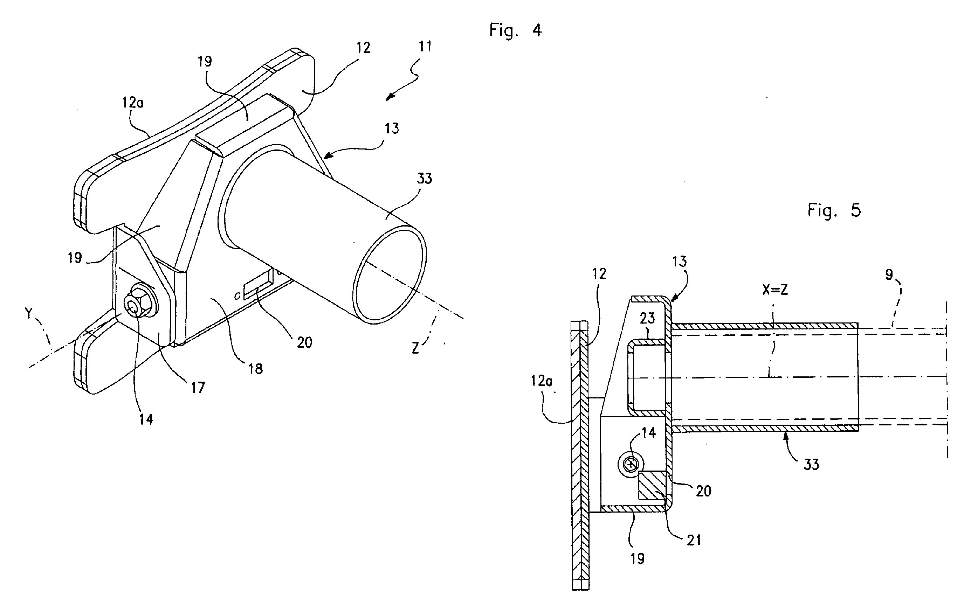

Fig. 4 is a perspective top view, on an enlarged scale, of a second component of the system of Fig. 1;
Fig. 5 is a view in longitudinal section of the component of Fig. 4.

### Preferred embodiment of the invention

In the drawings, a system for positioning and preloading a support beam 2 by bending deformation, embodied in accordance with the present invention, is shown overall by 1.

The beam 2 is preferably of telescopic type, with two sliding portions 3, 4, one sliding within the other, so as to enable selective adjustment of the overall length of the beam 2. At least one clamping sleeve 5 of conventional type is also keyed on the beam in order to lock the relative sliding of one portion with respect to the other, thus establishing the length of the beam 2.

In the embodiment described here, the support beam 2 extends in a substantially horizontal direction between two vertical walls 6, 7 which are opposite and mutually face one another, although the inventive concept on which the invention is based may be used in a similar manner for applications in which the beam extends in an inclined direction or abuts against non-vertical walls.

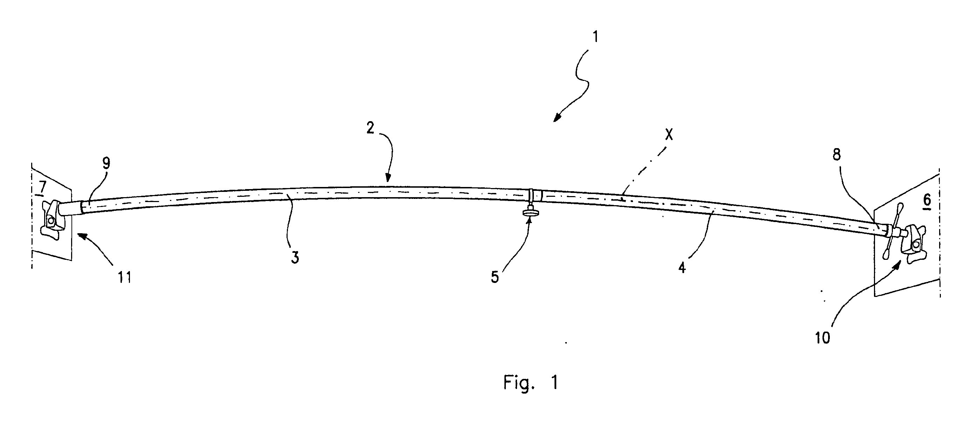

In the embodiment described here, the most common in this type of application, the beam 2, extending horizontally, is loaded by a weight, not shown in the accompanying drawings, which urges the beam 2 downwards in the direction defined by the force of gravity. The beam 2 therefore has to be preloaded by deforming it so that it bends upwards in a plane which is as vertical as possible. The final preloading configuration of the beam 2 is shown diagrammatically in Fig. 1.

The beam 2 extends along a longitudinal axis X and has first and second axially opposing ends 8, 9 housed in engagement in first and second anchoring units 10, 11 respectively, bearing directly on the walls 6, 7.

Each anchoring unit 10, 11 comprises a support base 12, formed as a plate and adapted to abut against the wall 6 or 7, a connection member 13 articulated on the support base 12 in order to oscillate about a pin 14 of axis Y, and an attachment portion 15 adapted to engage the first or the second end of the beam 2 respectively.

On the side of the support base 12 opposite the connection member 13, a layer 12a of soft material, for instance felt, is preferably interposed between the base 12 and the wall 6, 7.

The articulation pin 14 is housed in respective holes 16 provided symmetrically on a pair of flanges 17 of the support base 12, appropriately folded up at right angle, and held in position by screw means. The connection member 13 is substantially box-shaped, with a front plate 18 and edges 19 all folded up at right angle towards the support base 12.

The front plate 18 of the support base 12 is also provided with a slot 20 via which it is possible to control a level 21, secured on the inner side of the connection member 13 and forming a means indicating the horizontal inclination of the anchoring unit 10, 11.

The attachment portion 15 of the first anchoring unit 10 comprises an externally threaded rod 22 secured to the connection member 13 and extending perpendicularly from the front plate 18 along a longitudinal axis Z. A reinforcing rib 23 is preferably provided on the inner side of the connection member 13 to counter the axial thrusts to which the rod 22 is subject.

A coaxial bushing 24 is also keyed in a sliding manner on the rod 22 and is adapted to engage the beam 2 through the axial insertion of the bushing in the first end 8. The bushing 24 is also provided, on the side closest to the connection member 13, with a head 25 of broader section where it comes into abutment with the first end 8 of the beam 2.

Axial thrust means adapted to space the beam 2 from the connection member 13 are provided between the connection member 13 of the first anchoring unit 10 and the bushing 24. The thrust means comprise a sleeve 26, screw-engaged on the rod 22 and disposed between the bushing 24 and the front plate 18. Two actuation levers 27 are secured on the sleeve 26 on diametrically opposite sides in order to control the rotation of the sleeve and displace it axially along the rod 22. A thrust bearing 28 is advantageously interposed between the head 25 of the bushing 24 and the sleeve 26.

The directions of the axis Z of the rod 22 and the axis of articulation Y of the pin 14 are substantially perpendicular to another but are spaced as they are in staggered planes. In this way, any stress transmitted along the axis Z of the beam 2 to the connection member 13 causes the latter to oscillate about the axis of articulation Y.

Means indicating the displacement of the first end 8 of the beam with respect to the connection member 13 are also provided on the first anchoring unit 10.

These indicator means comprise a collar 29 screw-engaged on the sleeve 26 and a pair of lugs 30 secured on the head 25 of the bushing 24 and engaged in an axially sliding manner in respective and opposing slots 31 open longitudinally on the collar 29. The thread on the outer jacket of the sleeve 26, on which the collar 29 is engaged, preferably extends in the opposite direction (left-hand, for instance) to the thread (right-hand, for instance) on the inner jacket of the sleeve on which the rod 22 is engaged.

The sides of the slots 31 are advantageously provided with a graduated scale 32, showing the displacement of the first end 8 of the beam 2 following the thrust exerted thereon by the sleeve 26, as will be explained below.

The second anchoring unit 11, in which the second end 9 of the beam 2 is engaged is substantially the same as the first anchoring unit 10, apart from the fact that the thrust means are not provided in this second unit and the attachment portion 15 is formed by a bushing 33 into which the second end 9 of the beam is axially inserted. In this case as well, the bushing 33 extends perpendicularly from the front plate 18 of the connection member 13 along an axis Z spaced from and perpendicular to the axis of articulation Y of the pin 14.

The system 1 of the present invention operates as follows.

The ends 8 and 9 of the beam 2 are inserted in the attachment portion 15 of the anchoring units 10 and 11 and the beam 2 is then extended between the two walls 6 and 7 on which the bearing bases 12 of the anchoring units 10 and 11 bear. The overall length of the beam 2 is adjusted by means of the sliding portions 3 and 4 which are then locked in the desired position by the clamping sleeve 5.

The anchoring units 10, 11 are positioned on the walls 6, 7 so that the axis Y of the pin 14 is completely horizontal, with the assistance of the level 21. This arrangement makes it possible for the subsequent oscillation of the connection member 13 to take place in the vertical plane. The beam 2 is then locked in a starting position by means of an axial displacement obtained by a few screw turns of the sleeve 26 along the rod 22 until it encounters the thrust bearing 28, the bushing 24 and then the first end 8 of the beam 2.

In this starting position, the beam 2 is rectilinear, in a substantially horizontal position, with its longitudinal axis X coincident with the axis Z of the bushing 33 and the bushing 24 in which its two ends 8 and 9 are engaged.

Further action on the levers 27 then screws the sleeve 26 further along the rod 22 away from the front plate 18. After a possible further axial displacement which fully seats the beam 2 in the bushing 33 and against the head 25 of the bushing 24, the screwing action of the sleeve 26 on the rod 22 causes an axial compression of the beam 2 which is transmitted, via the attachment portions 15, to the connection members 13 of the two anchoring units 10 and 11.

As a result, the connection member 13 oscillates about the axis Y towards the support base 12. Following this oscillation, taking place simultaneously with respect to both anchoring units, the axis Z of the bushing 24 (coincident with the axis of the rod 22) and the axis Z of the bushing 33 are inclined upwards, transmitting a pair of forces to the ends 8 and 9 engaged therein which tends to bend the beam 2 upwards into the configuration shown in Fig. 1. The greater is the screwing action of the sleeve 26, the greater the deformation of the beam 2.

It will be appreciated that, in order to transmit efficiently the bending moment to the ends of the beam, the bushing 24 and the bushing 33 preferably have a non-negligible dimension of around 100 mm and the coupling with the beam has little play.

The degree of inclination of the axis Z obtained as a result of the axial stress exerted by the sleeve 26 on the beam 2 depends primarily on the distance between the axes Y and Z which is normally between 30 and 100 mm, and preferably between 40 and 50 mm.

Distances greater than the above values would require the dimensions of the anchoring unit to be greater, the provision of a larger distance between the connection member 13 and the support base 12 and the need for further reinforcement of the connection member 13.

Once the required degree of bending of the beam 2 has been achieved, the sleeve 26 is released. It will be appreciated that any axial return displacement of the beam 2 is prevented as it is blocked by the sleeve 26.

The extent of the axial displacement of the first end 8 of the beam with respect to the connection member 13 is shown by the relative position of the lugs 30 with respect to the collar 29 and is displayed and quantified by means of the scale 32 provided at the slots 31.

In the initial position, the lugs 30 are positioned at the base of the scale and the collar 29 preferably abuts against a head 26a of the sleeve 26. This initial position can be conveniently achieved by rotating the beam 2 when it is in the substantially horizontal position extending between the two walls 6 and 7 and has not yet been deformed by bending upwards.

In this position, moreover, with the first end 8 of the beam 2 against the bushing 24, the rotation of the bushing 24 about the axis Z is blocked as a result of the axial compression which has taken place, and so is that of the lugs 30 secured thereto and the collar 29 engaged in an axially sliding manner by the lugs 30.

Successive screwing of the sleeve 26 on the rod 22 by actuation of the levers 27, which is directly correlated with the axial displacement of the first end 8 of the beam by the connection member 13, causes a corresponding relative rotation between the collar 29 and the sleeve 26, which, as a result of the provision of the thread between the sleeve and the collar 29, displaces the latter axially away from the sleeve 26 towards the bushing 24. In this way, the lugs 30 are displaced along the slots 31 rising up the graduated scale 32 and thus provide an accurate indication of the degree of displacement obtained and therefore, indirectly, of the extent of compression and deformation of the beam 2.

The present invention thus solves the problem discussed above with reference to the cited prior art, and at the same time offers various other advantages, including more rapid assembly and dismantling of the system as a whole and the control of the degree to which the beam is preloaded.

A further advantages lies in the fact that the system for positioning and preloading the support beam of the present invention is much easier to manoeuvre than known systems as a result of the provision of thrust means disposed axially at the end of the beam and enabling the use of large manoeuvring levers with no possibility of interference between the latter and other components of the system. Moreover, the possibility of using relatively long levers also makes it possible to use a thread with a relatively long pitch so that the operator can make substantial axial displacements without excessive force.

## Claims

1. A system for positioning and preloading a support beam by bending deformation, comprising a beam a first anchoring unit (10) adapted to engage one end (8) of the beam (2), the second opposing end (9) of this beam adapted to be abutted at least in the axial direction, this first anchoring unit comprising:
- a support base (12) adapted to bear on an abutment surface (6) external to the system,
- a connection member (13) articulated on the support base in order to oscillate about an axis of articulation (Y) and
- an attachment portion (15) adapted to engage the first end of the beam and secured on the connection member such that the longitudinal axis (X) of this beam, when engaged in the attachment portion, is spaced from the axis of articulation (Y) of the connection member so as to cause the connection member to oscillate about this axis of articulation as a result of a stress directed along the longitudinal axis of the beam,
**characterized in that** thrust means (26) are disposed between the connection member and the end of the beam in order to space this beam (2) away from the connection member (13) along the longitudinal axis (X) of the beam thus causing the axial stress and the resulting oscillation of the connection member so that the beam is bent and deformed in the direction of oscillation of the connection member (13) by the engagement of the first end (8) in the attachment portion (15).

2. A system according to claim 1, wherein the attachment portion (15) comprises a rod (22) secured on the connection member and adapted to be inserted axially into the first end (8) of the beam (2).

3. A system according to claim 2, wherein the thrust means comprise a sleeve (26) screw-engaged in the rod (22) and adapted to abut against the first end (8) of the beam in order to displace this beam along the longitudinal axis (X) when the sleeve is screwed on the rod.

4. A system according to claim 3, wherein a support bushing (24) of the beam, abutting against the sleeve (26), is interposed between the rod (22) and the first end (8) of the beam.

5. A system according to claim 4, wherein a thrust bearing (28) is interposed between the sleeve (26) and the bushing (24).

6. A system according to any one of the preceding claims, wherein the first anchoring unit (10) comprises means indicating the displacement of the first end (8) of the beam with respect to the connection member (13).

7. A system according to claim 6, wherein the indicator means comprise a collar (29) engaged on the sleeve and a lug (30) secured on the support bushing (24) and engaged in a sliding manner in a longitudinal slot (31) provided on the collar.

8. A system according to claim 7, wherein the collar (29) is engaged on a thread obtained on the sleeve (26), this thread being in the opposite direction to the thread by means of which the sleeve is engaged on the rod (22).

9. A system according to one or more of the preceding claims, wherein a second end (9) of the beam is housed in engagement in a second anchoring unit (11) comprising a support base (12), adapted to bear on an abutment surface (7) external to the system, a connection member (13) articulated on this support base so as to oscillate about an axis of articulation (Y), and an attachment portion (15) adapted to engage the second end of the beam and secured on the connection member so that the longitudinal axis (X) of this beam, when engaged in the attachment portion, is spaced from the axis of articulation (Y) of the connection member so as to cause the connection member to oscillate about the axis of articulation as a result of a stress directed along the longitudinal axis of the beam.

10. A system according to one of more of the preceding claims, wherein inclination indicator means (21) are provided on the anchoring unit (10, 11) in order to control the inclination of the axis of articulation with respect to the direction of loading to which the beam (2) is subject.

11. A system according to claim 10, wherein the beam is subject to a weight and the inclination indictor means comprise a level (21) secured on the connection member (13).

12. A system according to one or more of the preceding claims, wherein the beam (2) is telescopic and its length may be adjusted by at least one clamping sleeve (5).

## Patentansprüche

1. System zur Positionierung und Vorbelastung eines Stützbalkens mittels einer Biegedeformation, das einen Balken (2) und eine erste Verankerungseinheit (10) zum Eingriff in ein Ende (8) des Balkens (2) aufweist, wobei das gegenüberliegende zweite Ende (9) dieses Balkens zumindest in der axialen Richtung anstoßen kann, wobei diese erste Verankerungseinheit umfasst:
- eine Trägerplatte (12) zur Auflage auf einer außerhalb des Systems liegenden Abstützfläche (6),
- ein Verbindungselement (13), das auf der Trägerplatte (12) gelenkig gelagert ist, um um eine Gelenkachse (Y) hin und her zu schwingen, und
- einen Befestigungsbereich (15), der mit dem ersten Ende des Balkens im Eingriff stehen kann und auf dem Verbindungselement so fixiert ist, dass die Längsachse (X) dieses Balkens beim Eingriff mit dem Befestigungsbereich von der Gelenkachse (Y) des Verbindungselements beabstandet ist, um **dadurch** zu bewirken, dass das Verbindungselement als Folge einer entlang der Längsachse des Balkens gerichteten Spannung um diese Gelenkachse hin und her schwingt,
**dadurch gekennzeichnet, dass** eine Schubkrafteinrichtung (26) zwischen dem Verbindungselement und dem Ende des Balkens angeordnet ist, um diesen Balken entlang der Längsachse (X) des Balkens vom Verbindungselement (13) beabstandet zu halten, um **dadurch**, die axiale Spannung und das daraus folgende Hin- und Herschwingen des Verbindungselements zu bewirken, so dass der Balken durch den Eingriff des ersten Endes (8) mit dem Befestigungsbereich (15) in der Schwingungsrichtung des Verbindungselements (13) gebogen und deformiert wird.

2. System nach Anspruch 1, wobei der Befestigungsbereich (15) eine Stange (22) aufweist, die auf dem Verbindungselement fixiert ist und in das erste Ende (8) des Balkens (2) axial eingefügt werden kann.

3. System nach Anspruch 2, wobei die Schubkrafteinrichtung eine auf die Stange (22) geschraubte Gewindemuffe (26) aufweist und gegen das erste Ende (8) des Balkens anstoßen kann, um diesen Balken entlang der Längsachse (X) zu verschieben, wenn die Gewindebuchse auf die Stange geschraubt wird.

4. System nach Anspruch 3, wobei eine an der Gewindemuffe (26) anliegende Lagerbuchse (24) des Balkens zwischen die Stange (22) und das erste Ende (8) des Balkens eingefügt ist.

5. System nach Anspruch 4, wobei ein Axiallager (28) zwischen die Gewindemuffe (26) und die Lagerbuchse (24) eingefügt ist.

6. System nach einem der vorhergehenden Ansprüche, wobei die erste Verankerungseinheit (10) eine Einrichtung aufweist, die die Verschiebung des ersten Endes (8) des Balkens in Bezug auf das Verbindungselement (13) anzeigt.

7. System nach Anspruch 6, wobei die Anzeigeeinrichtung eine mit der Gewindemuffe im Eingriff stehende Überschiebemuffe (29) und eine Mitnehmernase (30) aufweist, die an der Lagerbuchse (24) fixiert ist und mit einem längsverlaufenden Schlitz (31) verschiebbar im Eingriff steht, der auf der Überschiebemuffe vorgesehen ist.

8. System nach Anspruch 7, wobei die Überschiebemuffe (29) mit einem auf der Gewindemuffe (26) vorgesehenen Gewinde im Eingriff steht, wobei dieses Gewinde gegenläufig zu dem Gewinde ist, durch das die Gewindemuffe mit der Stange (22) im Eingriff steht.

9. System nach einem oder mehreren der vorhergehenden Ansprüche, wobei ein zweites Ende (9) des Balkens beim Eingriff in einer zweiten Verankerungseinheit (11) untergebracht ist, die eine Trägerplatte (12) zur Auflage auf einer außerhalb des Systems liegenden Abstützfläche (7), ein Verbindungselement (13), das auf der Trägerplatte gelenkig gelagert ist, um um eine Gelenkachse (Y) hin und her zu schwingen, und einen Befestigungsbereich (15) aufweist, der mit dem zweiten Ende des Balkens im Eingriff stehen kann und auf dem Verbindungselement so fixiert ist, dass die Längsachse (X) des Balkens beim Eingriff mit dem Befestigungsbereich von der Gelenkachse (Y) des Verbindungselements beabstandet ist, um **dadurch** zu bewirken, dass das Verbindungselement als Folge einer entlang der Längsachse des Balkens gerichteten Spannung um diese Gelenksachse hin und her schwingt.

10. System nach einem oder mehreren der vorhergehenden Ansprüche, wobei eine Neigungs-Anzeigeeinrichtung (21) auf der Verankerungseinheit (10, 11) vorgesehen ist, um die Neigung der Gelenkachse in Bezug auf die Belastungsrichtung zu kontrollieren, der der Balken (2) ausgesetzt ist.

11. System nach Anspruch 10, wobei der Balken einem Gewicht ausgesetzt ist und die Neigungs-Anzeigeeinrichtung eine Nivelliervorrichtung (21) aufweist, die am Verbindungselement (13) fixiert ist.

12. System nach einem oder mehreren der vorhergehenden Ansprüche, wobei der Balken (2) ausziehbar ist und seine Länge durch mindestens eine Spannhülse (5) eingestellt werden kann.

## Revendications

1. Système pour positionner et précharger une poutre de support par déformation sous flexion, comprenant une poutre, une première unité d'ancrage (10) adaptée à engager une extrémité (8) de la poutre (2), la seconde extrémité opposée (9) de cette poutre étant adaptée à venir buter, au moins dans la direction axiale, contre la première unité d'ancrage, comprenant :
- une base de support (12) adaptée à venir porter sur une surface de butée (6) externe au système,
- un élément de raccordement (13) articulé sur la base de support afin d'osciller autour d'un axe d'articulation (Y), et
- une portion d'attache (15) adaptée à engager la première extrémité de la poutre et fixée à l'élément de raccordement de telle façon que l'axe longitudinal (X) de cette poutre, lorsqu'elle est engagée dans la portion d'attache, est espacé de l'axe d'articulation (Y) de l'élément de raccordement de façon à amener l'élément de raccordement à osciller autour de cet axe d'articulation en résultat d'une contrainte dirigée le long de l'axe longitudinal de la poutre,
**caractérisé en ce que** des moyens de poussée (26) sont disposés entre l'élément de raccordement et l'extrémité de la poutre afin d'espacer cette poutre (2) en éloignement de l'élément de raccordement (13) le long de l'axe longitudinal de la poutre (X), provoquant ainsi la contrainte axiale et l'oscillation résultante de l'élément de raccordement de telle façon que la poutre est fléchie et déformée dans la direction d'oscillation de l'élément de raccordement (13) par l'engagement de la première extrémité (8) dans la portion d'attache (15).

2. Système selon la revendication 1, dans lequel la portion d'attache (15) comprend une tige (22) fixée sur l'élément de raccordement et adaptée à être insérée axialement dans la première extrémité (8) de la poutre (2).

3. Système selon la revendication 2, dans lequel les moyens de poussée comprennent un manchon (26) engagé par vissage dans la tige (22) et adapté à buter contre la première extrémité (8) de la poutre afin de déplacer cette poutre le long de l'axe longitudinal (X) quand le manchon est vissé sur la tige.

4. Système selon la revendication 3, dans lequel une douille de support (24) de la poutre, en butée contre le manchon (26), est interposée entre la tige (22) et la première extrémité (8) de la poutre.

5. Système selon la revendication 4, dans lequel un palier de poussée (28) est interposé entre le manchon (26) et la douille (24).

6. Système selon l'une quelconque des revendications précédentes, dans lequel la première unité d'ancrage (10) comprend des moyens indiquant le déplacement de la première extrémité (8) de la poutre par rapport à l'élément de raccordement (13).

7. Système selon la revendication 6, dans lequel les moyens indicateurs comprennent un collier (29) engagé sur le manchon et une patte (30) fixée sur la douille de support (24) et engagée en coulissement dans une fente longitudinale (31) prévue sur le collier.

8. Système selon la revendication 7, dans lequel le collier (29) est engagé sur un pas de vis ménagé sur le manchon (26), ce pas de vis s'étendant dans la direction opposée au pas de vis au moyen duquel le manchon est engagé sur la tige (22).

9. Système selon l'une ou plusieurs des revendications précédentes, dans lequel une seconde extrémité (9) de la poutre est logée en engagement dans une seconde unité d'ancrage (11) comprenant une base de support 12), adaptée à venir porter sur une surface de butée (7) externe au système, un élément de raccordement (13) articulé sur cette base de support de manière à osciller autour d'un axe d'articulation (Y), et une portion d'attache (15) adaptée à engager la seconde extrémité de la poutre et fixée sur l'élément de raccordement de telle façon que l'axe longitudinal (X) de cette poutre, lorsqu'elle est engagée dans la portion d'attache, est espacé de l'axe d'articulation (Y) de l'élément de raccordement de manière à amener l'élément de raccordement à osciller autour de l'axe d'articulation en résultat d'une contrainte dirigée le long de l'axe longitudinal de la poutre.

10. Système selon l'une ou plusieurs des revendications précédentes, dans lequel des moyens indicateurs d'inclinaison (21) sont prévus sur l'unité d'ancrage (10, 11) afin de commander l'inclinaison de l'axe d'articulation par rapport à la direction de chargement auquel la poutre (2) est soumise.

11. Système selon la revendication 10, dans lequel la poutre est soumise à un poids et les moyens indicateurs d'inclinaison comprennent un niveau (21) fixé sur l'élément de raccordement (13).

12. Système selon l'une ou plusieurs des revendications précédentes, dans lequel la poutre (2) est télescopique et sa longueur peut être ajustée par au moins un manchon de serrage (5).
